# EUROPÄISCHE PATENTSCHRIFT

(11) **EP 1 102 730 B1**
(45) Veröffentlichungstag und Bekanntmachung des Hinweises auf die Patenterteilung: **17.04.2002**
(21) Anmeldenummer: 99942773.5
(22) Anmeldetag: 01.07.1999
(51) Int. Cl.: C04B 35/443, C04B 35/66

(54) **FORMMASSE ZUR HERSTELLUNG EINER FEUERFESTEN AUSKLEIDUNG, GEBRANNTES FORMTEIL, AUSKLEIDUNG SOWIE VERFAHREN ZUR HERSTELLUNG EINES FORMTEILS**
MOULDING MATERIAL FOR THE PRODUCTION OF A FIRE-RESISTANT LINING, FIRED FORMED PART, LINING AND METHOD FOR THE PRODUCTION OF A FORMED PART
MATIERE MOULABLE DESTINEE A LA PRODUCTION D'UN REVETEMENT IGNIFUGE, PIECE MOULEE CUITE, REVETEMENT ET PROCEDE DE PRODUCTION D'UNE TELLE PIECE MOULEE

(30) Priorität: 06.07.1998 DE 19830186
(43) Veröffentlichungstag der Anmeldung: 30.05.2001
(73) Patentinhaber: SIEMENS AKTIENGESELLSCHAFT, 80333 München (DE)
(72) Erfinder: KOLLENBERG, Wolfgang, D-53359 Rheinbach (DE); GROTE, Holger, D-56727 Mayen (DE)
(86) Internationale Anmeldenummer: DE9901965
(87) Internationale Veröffentlichungsnummer: WO0001638

(56) Entgegenhaltungen:
- DE-B- 2 745 461
- US-A- 4 729 974
- US-A- 5 212 126

## Beschreibung

Die Erfindung betrifft eine Formmasse zur Herstellung einer feuerfesten Auskleidung eines Ofens, einer Brennkammer oder ähnlichem. Die Erfindung betrifft weiterhin ein gebranntes Formteil für eine feuerfeste Auskleidung sowie eine Auskleidung einer einem Heißgas aussetzbaren Kammer. Zudem betrifft die Erfindung ein Verfahren zur Herstellung eines Formteils für eine Feuerfestauskleidung, bei dem eine Formmasse gebrannt wird.

In der DE 36 45 335 C2 ist eine Auskleidung für eine Brennkammer einer Gasturbine beschrieben, welche Auskleidung aus einer Mehrzahl feuerfester Steine gebildet ist und einen thermischen Schutz einer Wand der Brennkammer gegenüber einem in der Brennkammer strömenden Heißgas darstellt. Eine weitere Auskleidung einer Brennkammer mit Wandplatten ist in der EP 0 724 116 A2 beschrieben. Die Wandplatten bestehen aus einer hochtemperaturbeständigen Strukturkeramik, z.B. aus SiC oder Si₃N₄. Eine Auskleidung von Kammern oder ähnlichen Bauteilen, die einem heißen Gas ausgesetzt werden, findet insbesondere auf dem Gebiet der Verbrennungstechnik, beispielsweise bei Verbrennungsöfen, statt.

Aus der Auslegeschrift 25 41 141 B2 geht ein verbessertes Verfahren zur Herstellung von Magnesium-Aluminat-Spinellen MgO*Al₂O₃ hoher Reinheit hervor. Das Material bietet Einsatzmöglichkeiten in feuerfesten oder hochwertigen keramischen Applikationen. Das Verhältnis der Gewichtsanteile von Magnesiumoxid und Aluminiumoxid im Spinell liegt hierbei zwischen 0,4 und 0,8, insbesondere im stöchiometrischen Verhältnis von 0,395. Ein Syntheseverfahren für Spinell vom Typ MgO*Al₂O₃ ist in der US-Patentschrift 2,805,167 angegeben. Die Synthese erfolgt durch Mischung von Magnesiumhydroxid Mg(OH)₂ und Aluminiumhydroxid Al(OH)₃ unter Zusatz von Wasser. Als Reaktionsprodukt ergibt sich Magnesium-Aluminat-Spinell MgO*Al₂O₃, dessen Spinellzusammensetzung beispielsweise Konzentrationen von 29,6% MgO und 70,4% Al₂O₃ aufweist. Daraus wird ein Spinellgranulat mit geringer Körnung hergestellt, dessen Summenkonzentration von Magnesiumoxid und Aluminiumoxid größer als etwa 90% ist. Das Spinellgranulat weist darüber hinaus Calciumoxid von bis zu 1%, Siliciumdioxid von bis zu etwa 2% bis 3% sowie Eisen-II-Oxid von bis zu 2% bis 3% auf. Dieses Material kann als Ausgangsmaterial für feuerfeste, temperaturfeste Erzeugnisse, beispielsweise Ziegelsteine auf Spinellbasis, verwendet werden. Die Herstellung möglichst eisenfreier spinellenthaltender Materialien ist in der EP 0 656 330 A1 beschrieben. Eisenfreie Spinelle sind insbesondere in der Hochofentechnik, in der Schmelztechnik (z.B. Tiegel) sowie in Schmelzöfen von Bedeutung. Die Behältnisse, die dem flüssigen heißen Metall, insbesondere Eisen und hochwertigen Stahllegierungen, ausgesetzt sind, werden mit Spinellmaterial ausgekleidet. Eisenverunreinigungen im Spinell, insbesondere Eisen-II-Oxid, können zu unerwünschten Wechselwirkungen mit der Schmelze führen und die Qualität der Eisen- und Stahlerzeugnisse deutlich herabsetzen. Mit einem Thermitverfahren wird Magnesium-Aluminat-Spinell MgO*Al₂O₃ hergestellt, der etwa 20% bis 40% MgO sowie etwa 55% bis 77% Al₂O₃ aufweist, sowie einen Eisen-II-Oxidgehalt von weniger als 0,5%.

Aus der DE 43 25 208 A1 geht ein feuerfestes Gußmaterial hervor, welches ein feuerfestes Aggregat, bestehend aus 20 bis 60 Gew.-% Magnesiumoxid-Aluminiumoxid-Spinell mit Teilchendurchmessern von 0,25 mm oder mehr, 5 bis 45 Gew.-% Aluminiumoxid, 10 bis 20 Gew.-% Siliciumkarbid, 0,5 bis 10 Gew.-% Nadelkoks und dem Rest, der aus mindestens einem Bindemittel, ausgewählt aus Schamotteton, ultrafeinem Siliciumoxid-Pulver und Aluminiumoxidzement besteht und einen organischen Schaumbildner enthält. Das feuerfeste Gußmaterial zeichnet sich durch eine gute Korrosionsbeständigkeit aus und bildet insbesondere kein explosives Gas. Es ist daher vor allem für formgebende Auskleidungen in der Metallurgie sowie für den Einsatz in der Stahlindustrie (Blashochofen-Technik) geeignet. Eine ähnliche Anwendung von Spinellmaterial wird in der EP 0 302 976 diskutiert. Hierbei werden Aluminiumoxid und Magnesiumoxid sowie ein Bindemittel gemischt und in eine gewünschte Form gebracht. Alternativ dazu können auch Tiegel, Löffel oder andere Transfer- oder Aufbewahrungsbehältnisse für ein geschmolzenes Metall mit dem Gemisch ausgekleidet werden. Vor der Aufnahme des flüssigen Metalls werden die aus dem Gemisch geformten Formteile oder die mit dem Gemisch ausgekleideten Behältnisse vorgeheizt. Während der Vorheiz- und Heizphase, die von etwa einer halben Stunde bis zu zwölf Stunden dauert, reagiert das Gemisch unter Bildung von Magnesium-Aluminat-Spinell MgO*Al₂O₃. Die Formgebung erfolgt hier bereits vor der Spinellbildung. Spinell liegt somit nicht bereits als Ausgangsmaterial vor, sondern wird erst als Produkt in-situ während des industriellen Prozesses (Vorheizphase) gebildet.

Ein Spinell-Klinker vom Magnesiumoxid-Aluminiumoxid-Typ, der Eisen-II-Oxid und Titandioxid an den Grenzen zwischen den Kristallkörnern enthält, ist in der DE 41 19 251 beschrieben. Weiterhin ist ein Schamottestein, der unter Verwendung des Klinkers hergestellt ist, angegeben. Der Schamottestein weist sehr gute Korrosionsresistenz und Zementbeschichtungseigenschaften auf. Der Schamottestein kann somit als feuerfestes Material für die Eisen- und Stahlherstellung und als nicht eisenhaltiges Futter und dergleichen verwendet werden. Das molare Verhältnis zwischen Magnesiumoxid und Aluminiumoxid in dem Spinell-Klinker ist mit 0,15 bis 2,55 angegeben.

Eine Zusammensetzung für einen Mörtel geht aus der EP 0 184 292 hervor. Der Mörtel weist Magnesium-Aluminat-Spinell MgO*Al₂O₃ in Gewichtsprozent zwischen 5% und 85% auf. Ferner liegt eine separate Magnesiumoxidphase mit 1 bis 25 Gew.-% vor. Zur Herstellung einer Phosphatbindung ist z.B. Phosphorsäure H₃PO₄ als reaktive Komponente der Mischung zugesetzt.

Dieser Zusatz bewirkt ein rascheres Abbinden und somit eine Beschleunigung des Abbindprozesses bei der Aushärtung. Es handelt sich hierbei um eine Mehrkomponentenmischung, die insbesondere für feuerfeste Auskleidungen, Beschichtungen geeignet ist, sowie Anwendungen für hohe korrosive Belastungen sowie hohe Temperaturen ermöglicht.

In der "Stahl und Eisen" 116 (1996) Nr. 9, Seiten 59 bis 66 wird von Andreas Buhr eine Studie an tonerdereichen Feuerfestbetonen für den Einsatz in der Stahlindustrie beschrieben. An kommerziellen Feuerfestbetonen auf Basis Andalusid, Bauxit, Korund und Spinell wurden die Hochtemperatureigenschaften der Betone, wie z.B. Heißdruckfestigkeit und Druckfließen, bestimmt und mit dem theoretischen Schmelzverhalten verglichen. Feuerfestbetone können hierbei entweder als vorgefertigte Formteile oder als vor Ort angemachte Gießmassen eingesetzt werden. Bei Feuerfestbetonen für die Stahlindustrie haben sich tonerdereiche, korundhaltige Spinellrohstoffe als vorteilhaft erwiesen, die kein freies Magnesiumoxid mehr enthalten und Tonerdegehalte bis 90% haben. Neben spinellhaltigen gibt es auch spinellbildende Betone. Diesen wird im Feinanteil Magnesiumoxid zugesetzt, das dann beim Einsatz in-situ durch Reaktion mit der Tonerde bei Temperaturen größer 1100 °C Spinell bildet, was mit einer Volumenzunahme verbunden ist. Die Feuerfestbetone auf Basis Korund oder Spinell bzw. Mischungen der beiden Zuschlagstoffe können im Vierstoffsystem CaO-MgO-Al₂O₃-SiO₂ bzw. in den darin enthaltenen Systemen CaO-Al₂O₃, CaO-MgO-Al₂O₃ und CaO-Al₂O₃-SiO₂ dargestellt werden.

In der DE 27 45 461 B1 ist ein hochfeuerfester Stein sowie ein Verfahren zur Herstellung und Verwendung des hochfeuerfesten Steins angegeben. Der Stein wird durch Brennen einer Formmasse hergestellt. Der gebrannte Stein enthält 70 bis 93 Gew.-% MgO*Al₂O₃-Spinell, 2 bis 8 Gew.-% Al₂O₃, 1 bis 9 Gew.-% Bindemittel und bis zu 27 Gew.-% hochfeuerfeste Zuschlagstoffe, wobei der Spinell als Schmelzkorn vorliegt. Der Stein weist neben der gewünschten mechanischen Festigkeit auch eine gute Beständigkeit gegenüber komplexen chemischen Angriffen auf. Insbesondere ist der Stein gegenüber oxidierenden und auch gegenüber reduzierenden Angriffen beständig. Der Stein kann zur Ausmauerung metallurgischer Aggregate (Öfen, Hochöfen) eingesetzt werden. Der Stein weist einen Anteil in Gewichtsprozent von ca. 27,50% MgO sowie ca. 66% Al₂O₃ auf.

Aufgabe der Erfindung ist es, eine Formmasse zur Herstellung einer feuerfesten Auskleidung, eines Formteils für eine feuerfeste Auskleidung anzugeben. Weitere Aufgaben der Erfindung bestehen darin, ein gebranntes Formteil für eine Feuerfestauskleidung, eine Auskleidung einer einem Heißgas aussetzbaren Kammer sowie ein Verfahren zur Herstellung eines Formteils für eine feuerfeste Auskleidung anzugeben.

Erfindungsgemäß wird die auf eine Formmasse gerichtete Aufgabe durch eine Formmasse gelöst, welche spinellhaltig ist, wobei der Spinell (MgO*Al₂O₃) in der Formmasse einen Gewichtsanteil von über 50% ausmacht und der Spinell selbst in Gewichtsprozent weniger als 95% Al₂O₃ und mehr als 5% MgO aufweist, sowie mit einem Anteil größer Null in Gewichtsprozent in der Formmasse von weniger als 15%, insbesondere weniger als 10%, von Calcium-Aluminaten (CaO*nAl₂O₃ mit n von 1 bis 6).

Eine solche Formmasse, auch als Gießmasse oder Gemenge bezeichnet, erlaubt das Einbringen einer Feuerfestauskleidung vor Ort und ohne Vorfertigung von entsprechenden Formteilen (Steinen). Es ist ebenfalls möglich, Formteile durch Ausgießen einfacher Kunststofformen herzustellen. Bezogen auf eine feuerfeste Auskleidung einer Kammer, insbesondere einer Brennkammer einer Gasturbine, ist es mithin möglich, entweder einzelne Formteile (Brennkammersteine) oder ganze Segmente vorzufertigen. Solche vorgefertigte Brennkammersteine oder Segmente können auch eine jeweilige komplizierte Geometrie aufweisen. Der Einsatz einfach geformter Formteile sowie der Wegfall eines Preßvorgangs ermöglicht eine kostengünstige und flexible Fertigung. Im Unterschied zu vorgefertigten feuerfesten Formteilen, wie gebrannten oder vorgebrannten Steinen, ist es mithin durch die Formmasse möglich, diese unmittelbar erst am Einsatzort zu verarbeiten. Somit ist die Herstellung von komplizierten Geometrien durch das Ausgießen entsprechender Formen ermöglicht, was einen flexibleren Einsatz im Vergleich zu vorgeformten Erzeugnissen ermöglicht. Es ist ebenfalls möglich, im Rahmen von Reparaturarbeiten unmittelbar vor Ort Formteile für eine Auskleidung herzustellen. Je nach Anwendungsfall kann hierbei die Formmasse fugenlos eingebracht werden, was zu einer Verringerung oder Vermeidung von Dehnungsfugen und zu einer homogeneren Oberfläche führt. Das Einbringen und Verfestigen der Formmasse kann durch Schütten, Stampfen, Vibrieren, Schleudern, Spritzen oder Torkretieren erfolgen. Eine solche Formmasse eignet sich mithin für die Herstellung monolithischer Konstruktionen, für Reparaturen sowie für das Verlegen und Verfugen.

Die Formmasse weist ein Calcium-Aluminat oder mehrere Calcium-Aluminate mit einem gesamten Anteil in Gew.-% von weniger als 15%, insbesondere weniger als 10% auf. Die überwiegend in Betracht kommenden Calcium-Aluminate weisen die chemische Zusammensetzung CaO*nAl₂O₃ auf, wobei n für eine Zahl zwischen 1 und 6 steht. Die Calcium-Aluminate dienen hierbei vorzugsweise als Binder für die spinellhaltige Formmasse. Besonders günstig für eine Formmasse bzw. ein Formteil zur Herstellung einer feuerfesten Auskleidung ist hierbei die Calcium-Aluminat-Phase mit einem Anteil CaO und 6 Anteilen Al₂O₃ (im folgenden als CA₆ bezeichnet). Diese Phase ist im Gegensatz zu den anderen CAₙ gegenüber Wasser beständig und bildet sich oberhalb von 1400° C. Als weitere günstige Eigenschaft weist die CA₆-Phase eine Struktur mit stengeligem Netzwerk auf, was zu einer Matrixverstärkung mit einer hohen Temperatur-Wechselbeständigkeit führt. Die CA₆-Phase bildet sich unter Temperatureinwirkung hauptsächlich aus der CA-Phase (CaO*Al₂O₃) und der CA₂-Phase (CaO*2Al₂O₃).

Vorzugsweise weist die Formmasse einen Anteil in Gewichtsprozent von mehr als 0,1%, insbesondere mehr als 0,5% von Calcium-Aluminaten (CaO*nAl₂O₃ mit n von 1 bis 2) auf.

Vorzugsweise beträgt der Anteil des Aluminiumoxides in dem Spinell (Angaben in Gewichtsprozent) zwischen 60% und 95%, insbesondere zwischen 70% und 85%, und der Anteil des Magnesiumoxids beträgt vorzugsweise mehr als 15%.

Durch Zugabe einer Flüssigkeit, insbesondere Wasser, kann eine hydraulische Bindung zwischen dem Spinell und den Calcium-Aluminaten sowie unter den Calcium-Aluminaten selbst erfolgen. Der Formmasse ist hierzu vorzugsweise ein Anteil in Gew.-% zwischen 4% und 20%, bezogen auf die gesamte Masse der Formmasse (Gemenge), zugesetzt. Bei einer hydraulischen Bindung erfolgt die Erstarrung und Erhärtung der Formmasse durch Zugabe einer geeigneten Flüssigkeit, hier vorzugsweise Wasser, die dadurch bedingte Ausbildung wasserhaltiger Minerale. Hierbei eingesetzte Phasen stammen vorzugsweise aus einem Dreistoffsystem CaO-SiO₂-Al₂O₃, welches allgemein als Zement bezeichnet wird. Für Anwendungen im Hochtemperaturbereich werden vor allem Al₂O₃-reiche Zemente mit geringen Gehalten an Siliciumoxid (SiO₂) eingesetzt. Der Gehalt an Siliciumoxid liegt hierbei vorzugsweise unter 2 Gew.-%, weiter bevorzugt deutlich unter 1,0 Gew.-%. Solche Zemente werden im folgenden auch als Hochtonerdezemente bezeichnet. Durch eine thermische Zersetzung von vorhandenen Hydratphasen bei Temperaturen unterhalb von 600 °C verliert die erstarrte bzw. gehärtete Formmasse an Festigkeit. Mit Bildung einer keramischen Bindung nimmt die Festigkeit wieder zu. Eine keramische Bindung wird hierbei durch Erhitzung, beispielsweise Sinterung, in Verbindung mit einer Verringerung der freien Oberflächenenergie aufgebaut. Diese Bindung tritt meist erst bei Temperaturen oberhalb 1000 °C ein.

Für den Aufbau einer hydraulischen Bindung stehen grundsätzlich sogenannte Portland-, Hütten-, Puzzolan- und Calcium-Aluminat-Zemente zur Verfügung. Für die Herstellung einer feuerfesten Auskleidung eignen sich vorzugsweise Portlandzemente und Calcium-Aluminate (Tonerde- und Hochtonerde-Zemente). Diese Hochtonerdezemente weisen einen Al₂O₃-Anteil von 70 bis 90%, einen CaO-Anteil von 30 bis 10%, einen SiO₂-Anteil zwischen 0,5 und 0,1%, einen Eisenoxid-Anteil (Fe₂O₃) zwischen 0,1 und 0,4%, sowie gegebenenfalls zusätzlich geringe Anteile von unter 1% Titanoxid (TiO₂), Magnesiumoxid (MgO), Natriumoxid (Na₂O) auf. Die Hauptmineralphasen solcher Hochtonerde-Zemente sind hierbei die Calciumaluminate CA, CA₂, C₁₂A₇ sowie Alpha-Aluminiumoxid. Die meisten der Calciumaluminat-Phasen reagieren unter Normalbedingungen mit Wasser exotherm zu kalkreichen Hydro-Aluminaten und Aluminiumhydroxid. Die Reaktionsgeschwindigkeit ist dabei abhängig vom CaO-Gehalt und der Phasenzusammensetzung in der jeweiligen Mischung. Bei hohen Temperaturen, insbesondere oberhalb von 1400 °C, bildet sich aus den mit Wasser reagierenden Calciumaluminaten die gegenüber Wasser inerte Calciumaluminatphase CA₆. Die CA₆-Phase bildet sich hierbei in der Matrix in stengeligen Aggregaten aus.

Die Formmasse kann weiterhin zusätzlich Aluminiumoxid (Al₂O₃), insbesondere in Form von Korund, enthalten. Weiterhin kann die Formmasse in geringen Mengen Aluminiumsilikat (Al₂O₃*2SiO₂, Mullit), Siliciumoxid (SiO₂) sowie Oxide anderer metallischer Elemente, wie Magnesium oder eines der Übergangselemente, z.B. Titan, aufweisen. Der Anteil in Gew.-% an Siliciumoxid ist vorzugsweise unter 2%. Die Formmasse kann weiterhin zusätzlich einen Anteil an Gew.-% von weniger als 20%, insbesondere weniger als 15% einer reaktiven Tonerde aufweisen. Der Anteil solcher Zugaben liegt für Calciumoxid (CaO) vorzugsweise unter 1%, insbesondere unter 0,5%. Der Anteil von Siliciumoxid liegt vorzugsweise unter 0,1%. Der Anteil von Natriumoxid (Na₂O) liegt vorzugsweise unter 0,2%. Der Anteil von Eisenoxid (Fe₂O₃) liegt vorzugsweise unter 0,1%. Eine solche Formmasse hat eine Rohdichte (Angaben in g/cm³) zwischen 3,0 bis 3,5, vorzugsweise zwischen 3,2 und 3,4. Die offene Porizität liegt hierbei vorzugsweise zwischen 0,5% und 2%, insbesondere zwischen 0,8% und 1,5%. Die Wasseradsorption der Formmasse liegt in einem Bereich unterhalb 1%. Die Kornfraktion unterschiedlicher Spinelle liegt hier bei beispielsweise zwischen 0,5 und 1 mm, zwischen 0,3 bis 0,5 mm bei unter 90µm, unter 45µm sowie unter 20µm.

Die auf ein Verfahren zur Herstellung eines Formteils für eine feuerfeste Auskleidung gerichtete Aufgabe wird dadurch gelöst, daß eine Formmasse mit einem Gewichtsanteil von über 50% Spinell sowie mit einem Anteil größer Null und weniger als 15% von Calcium-Aluminaten (CaO*Al₂O₃ mit n von 1 bis 6) mit Wasser gemischt, getrocknet und bei einer Temperatur von über 1350 °C, insbesondere über etwa 1500 °C, gebrannt wird, wobei der Spinell in der Formmasse in Gewichtsprozenten weniger als 95% Al₂O₃ und mehr als 5% MgO aufweist.

Die Formmasse kann nach einer Trocknung bei 100 °C in einem Trockenschrank in einem entsprechenden Mischer homogenisiert werden und dabei die erforderliche Menge an Wasser zugegeben werden. Die so gefertigte Formmasse wird vorzugsweise in eine Form gegossen und beispielsweise durch Vibrieren verdichtet sowie an Luft getrocknet, beispielsweise 24 h. Nach dem Ausformen kann die Masse wiederum für eine vorgegebene Zeitdauer von beispielsweise 24 h in einem Trockenschrank bei einer Temperatur von etwa 110 °C getrocknet werden. Nach der Trocknung wird die Formmasse bei einer Temperatur von 1400 °C oder 1500 °C oder höher gebrannt. Das Brennen des Formteils wird vorzugsweise durch eine lineare Temperatursteigerung auf die Brenntemperatur oberhalb von 1350 °C innerhalb von 4 bis 5 h durchgeführt und die Formmasse für eine Zeitdauer von 2 h oder mehr auf der Brenntemperatur gehalten. Somit wird eine keramische Bindung durch Erhitzen (Sinterung) in Verbindung mit einer Verringerung der freien Oberflächenenergie aufgebaut. Diese Bindung tritt meist erst bei Temperaturen oberhalb von etwa 1000 °C ein. Man unterscheidet dabei die nasse von der trockenen Sinterung. Bei der nassen Sinterung wird der feuerfesten Formmasse ein Additiv zur Erzeugung einer früher eintretenden Schmelzphasenbildung zugegeben. Hierdurch kann das Einsetzen einer keramischen Bindung beeinflußt werden. Gleichzeitig können sich solche Zusätze auf die Feuerbeständigkeit auswirken.

Die auf ein gebranntes Formteil für eine Feuerfestauskleidung gerichtete Aufgabe wird durch ein Formteil gelöst, welches einen Anteil in Gew.-% von mehr als 50% von Spinell (MgO*Al₂O₃) und einen nachweisbaren Anteil von Calcium-Aluminat (CaO*6Al₂O₃) in der Phase CA₆ aufweist. Vorzugsweise liegt der Anteil der CA₆-Phase über 0,1 Gew.-%, insbesondere über 1%. Der Spinell seinerseits weist vorzugsweise Aluminiumoxid (Al₂O₃) in Gew.-% zwischen 75% und 90% auf.

Das gebrannte Formteil weist vorzugsweise keine CA-Phase des Calciumaluminates auf. Bei Vorliegen eines allenfalls geringen Anteils der CA₂-Phase liegt dieser Anteil größenordnungsmäßig im Bereich des Anteils der CA₆-Phase oder ist deutlich geringer als der Anteil der CA₆-Phase. Das Calcium-Aluminat der CA₆-Phase liegt vorzugsweise in einer stengelförmigen Form vor.

Die offene Porosität des Formteils beträgt vorzugsweise über 10% und liegt vorzugsweise in einem Bereich zwischen 15% und 35%. Die Rohdichte des Formteils liegt vorzugsweise unter 3,5 g/cm³, insbesondere unterhalb 3,0 g/cm³.

Das Formteil ist vorzugsweise im wesentlichen frei von freiem Aluminiumoxid, so daß der Anteil des Aluminiumoxids vorzugsweise deutlich unter 1 Gew.-% beträgt. Dies ist insbesondere dann günstig, wenn das Formteil Ölasche ausgesetzt wird.

Die Biegefestigkeit beträgt unter Normalbedingungen im Mittel vorzugsweise über 6 MPa gemessen in einem Vier-Punkt-Biegeversuch, und liegt damit deutlich höher als die Biegefestigkeit von Formteilen aus normalem Korund oder Mullit. Das Formteil weist vorzugsweise einen hohen Anteil einer Grobkornfraktion mit einer Fraktion zwischen 0,3 bis 1 mm auf, wodurch gegenüber einer feinkörnigeren Kornstruktur eine deutlich höhere Festigkeit erreicht wird. Die Festigkeit des Formteils des mit einer relativ groben Kornfraktion ist deutlich höher als die Festigkeit von Brennkammersteinen bestehend aus Korund oder Mullit. Das Formteil wird vorzugsweise zur Auskleidung einer Wand in einer einem Heißgas aussetzbaren Kammer, insbesondere einer Brennkammer einer Gasturbine oder einem Ofen, angeordnet.

Die auf eine Auskleidung gerichtete Aufgabe wird erfindungsgemäß durch eine Auskleidung einer einem Heißgas aussetzbaren Kammer, insbesondere einer Brennkammer einer Gasturbine, dadurch gelöst, daß zumindest ein gebranntes spinell-haltiges Formteil mit der CA₆-Phase von Calcium-Aluminat zum Schutz einer Wand der Kammer gegen das Heißgas an dieser Wand angeordnet ist.

Anhand der in der Zeichnung dargestellten Ausführungsbeispiele werden die Formmasse, das Formteil sowie die feuerfeste Auskleidung für eine Kammer, insbesondere eine Brennkammer einer Gasturbine, näher erläutert. Es zeigen:
- FIG 1: einen Querschnitt durch eine Ringbrennkammer einer Gasturbine,
- FIG 2: ein Diagramm zur Hydratation und Dehydratation von Tonerdezement,
- FIG 3: das Phasendiagramm des Zweistoffsystems CaO-Al₂O₃ und
- FIG 4: eine Röntgendifraktometeranalyse eines Formteils.

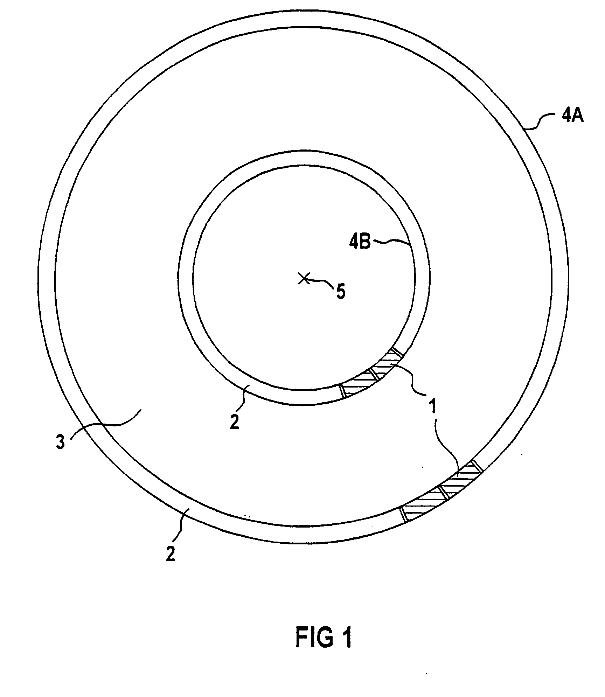

In Figur 1 ist in schematischer und nicht nicht maßstäblicher Darstellung ein Querschnitt durch eine Brennkammer 2, die als Ringbrennkammer 3 einer stationären Gasturbine ausgebildet ist, gezeigt. Die Ringbrennkammer 3 weist eine äußere Wandung 4A und eine von dieser umschlossenen innere Wandung 4B auf. Die Ringbrennkammer 3 erstreckt sich entlang einer Turbinenachse 5. An der jeweiligen Wand 4A, 4B der Brennkammer 3 ist in die Brennkammer 3 hineinragend jeweils eine feuerfeste Auskleidung 2 aus einer Vielzahl von Formteilen 1 angeordnet. Zur vereinfachten Darstellung sind lediglich für die an der inneren Wand 4B und an der äußeren Wand 4A angeordnete Auskleidung 2 jeweils schematisch nur zwei Formteile 1 stellvertretend für alle Formteile dargestellt. Zwischen benachbarten Formteilen 1 kann eine Dehnungsfuge (nicht näher dargestellt) vorgesehen sein.

Das Formteil 1 ist hierbei aus einer Formmasse durch Brennen, vorzugsweise bei einer Temperatur von über 1450 °C hergestellt, die ein Gemenge aus Spinell (MgO*Al₂O₃) und einem Tonerdezement aus Calciumaluminat mit gegebenenfalls geringen Zusätzen an Siliciumoxid und weiteren Oxiden wie Korund, Mullit oder Magnesiumoxid ist.

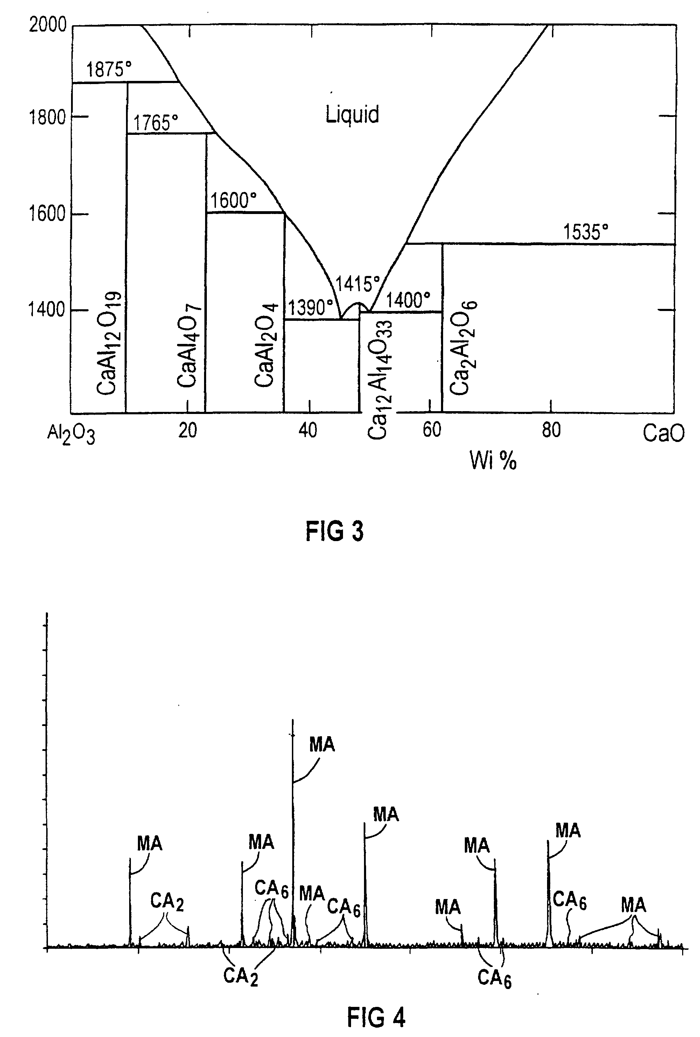

In Figur 4 ist beispielhaft eine Röntgendifraktometer-Analyse eines Formteils 1 dargestellt, welches durch Brennen bei 1500 °C einer Formmasse, die im wesentlichen folgende Zusammensetzung aufweist (Angaben in Gew.-%) :
40,7% von Spinell AR78 mit einer Kornfraktion von 0,5 bis 1 mm,
23,2% von Spinell AR78 mit einer Kornfraktion zwischen 0 und 0,5 mm,
5,8% von Spinell AR90 mit einer Kornfraktion von 0,3 bis 0,5 mm,
5,8% von Spinell MR66 mit einer Kornfraktion bis 90 µm,
2,9% von Spinell AR78 mit einer Kornfraktion bis 45 µm, Spinell AR78 mit einer Kornfraktion kleiner 20 µm,
10% eines Hochtonerdezementes sowie
< 0,03% an Zitronensäure und einem Verflüssiger.

Dieser Formmasse wurde darüber hinaus Wasser in einem Anteil von 10,8 Gew.-% bezogen auf die gesamte Masse zugefügt.

Die Zusammensetzung der mit den Abkürzungen MR68, AR78 und AR90 bezeichneten Spinelle ist in Tabelle 1 angegeben.

**Tabelle 1:**

| [Gew.-%] | MR 66 | AR 78 | AR 90 |
|---|---|---|---|
| Al₂O₃ | 66 | 76 | 90 |
| MgO | 33 | 23 | 9 |
| CaO | <0,4 | <0,3 | <0,25 |
| SiO₂ | <0,09 | <0,06 | <0,05 |
| Na₂O | <0,05 | <0,15 | <0,17 |
| Fe₂O₃ | <0,1 | <0,1 | <0,1 |
| Rohdichte [g/cm³] | 3,24-3,30 | 3,22-3,28 | 3,30-3,40 |
| Offene Porosität [%] | 0,8-1,5 | 0,8-1,5 | 1,5 |
| Wasser Adsorption [%] | <0,8 | <0,8 | <1 |

| Phasenzusammensetzung | | | |
|---|---|---|---|
| MgAl₂O₄ | xxx | xxx | xxx |
| α-Al₂O₃ | / | / | x |
| MgO | xx | / | / |
| xxx: viel, xx: wenig; x: sehr wenig. | | | |

Der verwendete Hochtonerdenzement weist (Angaben in Gew.-%) 70 bis 72% Al₂O₃, 26 bis 27% CaO, 0,1% SiO₂, 0,1% Fe₂O₃, 0,3% K₂O + Na₂O auf. Die Hauptmineralphasen sind hierbei CA und CA₂, wobei C für Calciumoxid (CaO) und A für Al₂O₃ stehen. Die durch Brennen bei 1500 °C und einer Haltezeit von 2 h aus der Formmasse erzeugten Formteile weisen, wie in der Röntgendifraktometer-Analyse aus Figur 4 ersichtlich ist, überwiegend Spinell (MgO*Al₂O₃, abgekürzt als MA sowie die Hauptmineralphasen CA₂ und CA₆) auf. Das aus der Formmasse gebrannte Formteil weist darüber hinaus kein nachweisbares freies Aluminiumoxid auf. Darüber hinaus ist der Anteil der Phase CA₂ geringer als der Anteil der mit Wasser nicht mehr reagierenden Phase CA₆. Ein aus dieser Formmasse hergestelltes Formteil hat eine Biegefestigkeit im Mittel von 6,33 MPa mit einer Standardabweichung von 0,28 MPa auf. Durch die Zugabe der Spinelle mit unterschiedlichen Kornfraktionen erhält das Formteil einen Aufbau aus Grob, Mittel- und Feinkorn. Das Grobkorn ist hierbei xenomorph und besitzt teilweise gestreckte Form.

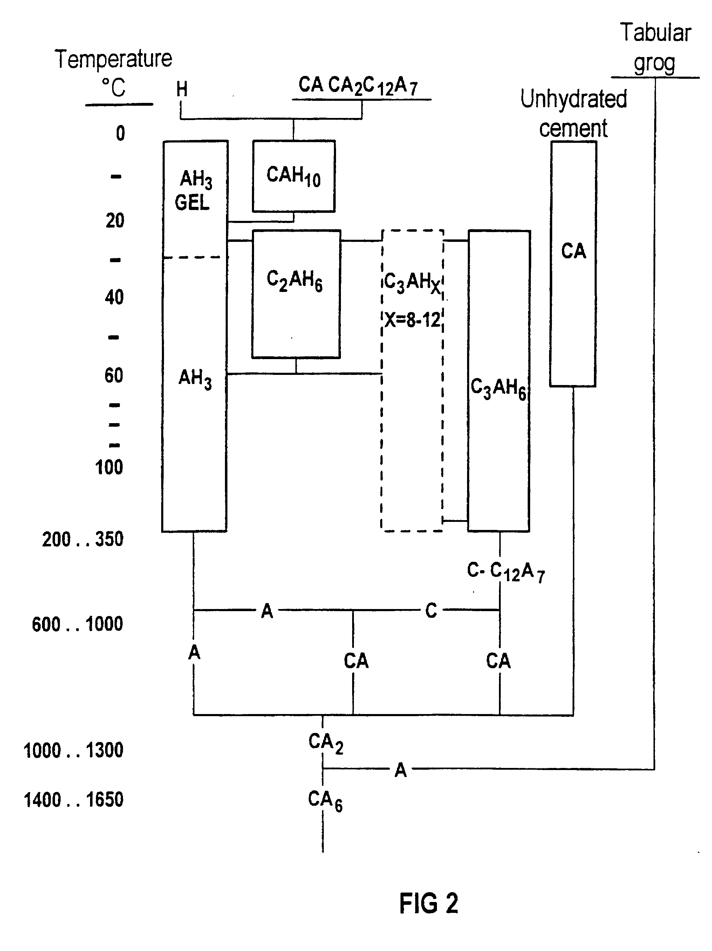

In Figur 3 ist das Phasendiagramm des Zweistoffsystems CaO und Al₂O₃ dargestellt. Figur 2 zeigt eine Darstellung der Abhängigkeit von Hydratation und Dehydratation von einem Tonerdenzement von der Temperatur in °C. Es ist erkennbar, daß die Phase CA durch Zugabe von Wasserstoff durch verschiedene Prozesse unter teilweise Bildung von Aluminiumhydroxiden bei hohen Temperaturen bis 1000 °C in die Phase CA₂ übergehen, was ebenfalls für einen hydratfreien Zement bestehend im wesentlichen aus der Phase CA gilt. Bei Temperaturen oberhalb von 1300 °C bildet sich aus der Phase CA₂ durch Einbindung von Aluminiumoxid (Al₂O₃, in dem Diagramm auch mit A bezeichnet) die nicht mehr in Wasser lösliche und mit Wasser reagierende Phase CA₆, insbesondere in einem Temperaturbereich zwischen 1400 bis 1650 °C.

Die Erfindung zeichnet sich durch eine spinellhaltige Formmasse zur Herstellung einer feuerfesten Auskleidung aus, die vorzugsweise zur Bindung des Spinells Calcium-Aluminate aufweist, welche sich nach Brennen bei einer Temperatur von oberhalb 1350 °C in die nicht mehr mit Wasser reagierende Phase CA₆ des Calcium-Aluminats (CaO*6Al₂O₃) umwandeln. Für eine Anwendung in einer Verbrennungskammer, beispielsweise einer Brennkammer einer Gasturbine oder einem Brennofen, weist ein aus der Formmasse gebranntes Formteil vorzugsweise im wesentlichen kein freies Aluminiumoxid, insbesondere kein Korund, auf.

## Patentansprüche

1. Spinellhaltige Formmasse zur Herstellung einer feuerfesten Auskleidung mit einem Gewichtsanteil von über 50% Spinell (MgO*Al₂O₃), wobei der Spinell in Gewichtsprozent weniger als 95% Al₂O₃ und mehr als 5% MgO aufweist, sowie mit einem Anteil größer Null in Gewichtsprozent von weniger als 15%, insbesondere weniger als 10%, von Calcium-Aluminaten (CaO*nAl₂O₃ mit n von 1 bis 6).

2. Formmasse nach Anspruch 1,
mit einem Anteil in Gewichtsprozent von mehr als 0,1%, insbesondere mehr als 0,5%, von Calcium-Aluminaten (CaO*Al₂O₃ mit n von 1 bis 2).

3. Formmasse nach Anspruch 1 oder 2,
bei der der Spinell in Gewichtsprozent zwischen 60% und 95%, insbesondere zwischen 70% und 85% Al₂O₃, und mehr als 15% MgO aufweist.

4. Formmasse nach einem der vorhergehenden Ansprüche,
der eine Flüssigkeit, insbesondere Wasser, mit einem Anteil in Gewichtsprozent zwischen 4% und 20% zugesetzt ist.

5. Formmasse nach einem der vorhergehenden Ansprüche,
welche zusätzlich Aluminiumoxid (Al₂O₃) , insbesondere in Form von Korund, Aluminiumsilicat ( 3Al₂O₃ * 2SiO₂), Siliziumoxid (SiO₂) und/oder ein Oxid eines Übergangelementes aufweist.

6. Formmasse nach einem der vorhergehenden Ansprüche,
mit einem Anteil in Gewichtsprozent von weniger als 2% Siliziumoxid (SiO₂).

7. Formmasse nach einem der vorhergehenden Ansprüche,
mit einem Anteil in Gewichtsprozent von weniger als 20%, insbesondere weniger als 15%, reaktiver Tonerde.

8. Gebranntes Formteil (1) für eine Feuerfestauskleidung (2) mit einem Anteil in Gewichtsprozent von mehr als 50% von Spinell (MgO*Al₂O₃) und einem nachweisbaren Anteil von Calcium-Aluminat (CaO*6 Al₂O₃).

9. Formteil (1) nach Anspruch 8,
bei dem der Spinell in Gewichtsprozent zwischen 75% und 90% Aluminiumoxid (Al₂O₃) aufweist.

10. Formteil (1) nach Anspruch 8 oder 9,
mit einem allenfalls geringen Anteil an dem Calcium-Aluminat CaO*2 Al₂O₃, wobei der Anteil des Calcium-Aluminates CaO*6 Al₂O₃ in der Größenordnung oder größer als der Anteil des Calcium-Aluminates CaO*2 Al₂O₃ ist.

11. Formteil (1) nach einem der Ansprüche 8 bis 10,
bei dem das Calcium-Aluminat CaO*6 Al₂O₃ in stengelförmiger Form vorliegt.

12. Formteil (1) nach einem der Ansprüche 8 bis 11,
mit einer offenen Porosität von über 10%, insbesondere in einem Bereich zwischen 15% und 35%.

13. Formteil (1) nach einem der Ansprüche 8 bis 12,
mit einer Rohdichte unterhalb 3,5g/cm³, insbesondere unterhalb 3,0g/cm³.

14. Formteil (1) nach einem der Ansprüche 8 bis 13,
welches im wesentlichen frei von freiem Aluminiumoxid (Al₂O₃) ist.

15. Formteil (1) nach einem der Ansprüche 8 bis 14,
welches bei Normalbedingungen eine Biegefestigkeit im Mittel von über 6 MPa gemessen in einem Vier-Punkt-Biegeversuch aufweist.

16. Formteil (1) nach einem der Ansprüche 8 bis 15,
welches an einer Wand in einer einem Heißgas aussetzbaren Kammer (3), insbesondere einer Brennkammer einer Gasturbine, angeordnet ist.

17. Auskleidung (2) einer einem Heißgas aussetzbaren Kammer (3), insbesondere einer Brennkammer einer Gasturbine, umfassend zumindest ein Formteil (1) nach einem der Ansprüche 8 bis 16 zum Schutz einer Wand (4) der Kammer (3) gegen das Heißgas.

18. Verfahren zur Herstellung eines Formteils (1) für eine Feuerfestauskleidung (2) bei dem eine Formmasse mit einem Gewichtsanteil von über 50% Spinell (MgO*Al₂O₃) sowie mit einem Anteil größer Null und weniger als 15% Calcium-Aluminaten (CaO*n Al₂O₃ mit n von 1 bis 6) mit Wasser gemischt, getrocknet und bei einer Temperatur von über 1350°C, insbesondere über etwa 1500 °C, gebrannt wird, wobei der Spinell in Gewichtsprozent weniger als 95% Al₂O₃ und mehr als 5% MgO aufweist.

## Claims

1. Spinel-containing moulding compound for the production of a refractory lining, comprising over 50% by weight of spinel (MgO*Al₂O₃), the spinel having less than 95% by weight of Al₂O₃ and more than 5% by weight of MgO, and comprising more than 0% by weight and less than 15% by weight, in particular less than 10% by weight, of calcium aluminates (CaO*nAl₂O₃, where n is from 1 to 6).

2. Moulding compound according to Claim 1, containing more than 0.1% by weight, in particular more than 0.5% by weight, of calcium aluminates (CaO*nAl₂O₃, where n is from 1 to 2).

3. Moulding compound according to Claim 1 or 2, in which the spinel has between 60% by weight and 95% by weight, in particular between 70% by weight and 85% by weight, of Al₂O₃, and more than 15% by weight of MgO.

4. Moulding compound according to one of the preceding claims, to which a liquid, in particular water, is added in a proportion of between 4% by weight and 10% by weight.

5. Mounding compound according to one of the preceding claims, which additionally includes aluminium oxide (Al₂O₃), in particular in the form of corundum, aluminium silicate (3Al₂O₃ * 2SiO₂), silicon oxide (SiO₂) and/or an oxide of a transition element.

6. Moulding compound according to one of the preceding claims, comprising less than 2% by weight of silicon oxide (SiO₂).

7. Moulding compound according to one of the preceding claims, comprising less than 20% by weight, in particular less than 15% by weight, of reactive alumina.

8. Fired shaped part (1) for a refractory lining (2), comprising more than 50% by weight of spinel (MgO*Al₂O₃) and a detectable level of calcium aluminate (CaO*6 Al₂O₃).

9. Shaped part (1) according to Claim 8, in which the spinel has between 75% by weight and 90% by weight of aluminium oxide (Al₂O₃).

10. Shaped part (1) according to Claim 8 or 9, comprising at most a small proportion of the calcium aluminate CaO*2 Al₂O₃, the proportion of the calcium aluminate CaO*6 Al₂O₃ being of the same order of magnitude as or higher than the proportion of the calcium aluminate CaO*2 Al₂O₃.

11. Shaped part (1) according to one of Claims 8 to 10, in which the calcium aluminate CaO*6 Al₂O₃ is in columnar form.

12. Shaped part (1) according to one of Claims 8 to 11, having an open porosity of over 10%, in particular in a range between 15% and 35%.

13. Shaped part (1) according to one of Claims 8 to 12, having a bulk density of less than 3.5 g/cm³, in particular less than 3.0 g/cm³.

14. Shaped part (1) according to one of Claims 8 to 13, which is substantially free of free aluminium oxide (Al₂O₃).

15. Shaped part (1) according to one of Claims 8 to 14, which under standard conditions has a mean flexural strength of over 6 MPa, measured in a four-point bending test.

16. Shaped part (1) according to one of Claims 8 to 15, which is arranged on a wall in a chamber (3) which can be exposed to a hot gas, in particular a combustion chamber of a gas turbine.

17. Lining (2) for a chamber (3) which can be exposed to a hot gas, in particular a combustion chamber of a gas turbine, comprising at least one shaped part (1) according to one of Claims 8 to 16 to protect a wall (4) of the chamber (3) from the hot gas.

18. Process for producing a shaped part (1) for a refractory lining (2), in which a moulding compound comprising over 50% by weight of spinel (MgO*Al₂O₃) and comprising more than zero and less than 15% of calcium aluminates (CaO*n Al₂O₃, where n is from 1 to 6) is mixed with water, dried and fired at a temperature of over 1350°C, in particular over approximately 1500°C, the spinel having less than 95% by weight of Al₂O₃ and more than 5% by weight of MgO.

## Revendications

1. Matière à mouler contenant un spinelle pour la fabrication d'un garnissage réfractaire ayant une proportion en poids de plus de 50% de spinelle (MgO*Al₂O₃), le spinelle comportant en pourcentage en poids moins de 95% d'Al₂O₃ et plus de 5% de MgO ainsi qu'une proportion supérieure à zéro en pourcentage en poids de moins de 15%, notamment de moins de 10%, d'aluminate de calcium (CaO*nAl₂O₃ n allant de 1 à 6).

2. Matière à mouler suivant la revendication 1, ayant une proportion en pourcentage en poids de plus de 0,1%, notamment de plus de 0,5% d'aluminate de calcium (CaO*ₙAl₂O₃ n allant de 1 à 2).

3. Matière à mouler suivant la revendication 1 ou 2, dans laquelle le spinelle comporte en pourcentage en poids entre 60% et 95%, notamment entre 70% et 85%, d'Al₂O₃ et plus de 15% de MgO.

4. Matière à mouler suivant l'une des revendications précédentes, à laquelle est ajoutée un liquide, notamment de l'eau, en une proportion en pourcentage en poids comprise entre 4% et 20%.

5. Matière à mouler suivant l'une des revendications précédentes, qui comporte en plus de l'oxyde d'aluminium (Al₂O₃), notamment sous la forme de corindon, de silicate d'aluminium (3Al₂O₃ * 2SiO₂), d'oxyde de silicium (SiO₂) et/ou d'un oxyde d'un élément de transition.

6. Matière à mouler suivant l'une des revendications précédentes, ayant une proportion en pourcentage en poids de moins de 2% d'oxyde de silicium (SiO₂).

7. Matière à mouler suivant l'une des revendications précédentes, ayant une proportion en pourcentage en poids de moins de 20%, notamment de moins de 15%, d'argile réactive.

8. Pièce (1) moulée calcinée pour un garnissage (2) réfractaire ayant une proportion en pourcentage en poids de plus de 50% de spinelle (MgO*Al₂O₃) et une proportion détectable d'aluminate de calcium (CaO*6 Al₂O₃).

9. Pièce (1) moulée suivant la revendication 8, dans laquelle le spinelle comprend en pourcentage en poids entre 75% et 90% d'oxyde d'aluminium (Al₂O₃).

10. Pièce (1) moulée suivant la revendication 8 ou 9, comprenant tout au plus une petite proportion d'aluminate de calcium CaO*2 Al₂O₃, la proportion de l'aluminate de calcium CaO*6 Al₂O₃ étant de l'ordre de grandeur ou étant supérieure à la proportion de l'aluminate de calcium CaO*2 Al₂O₃.

11. Pièce (1) moulée suivant l'une des revendications 8 à 10, dans laquelle l'aluminate de calcium CaO*6 Al₂O₃ se présente sous forme d'aiguilles.

12. Pièce (1) moulée suivant l'une des revendications 8 à 11, ayant une porosité ouverte de plus de 10%, notamment de l'ordre de 15% à 35%.

13. Pièce (1) moulée suivant l'une des revendications 8 à 12, ayant une masse volumique apparente inférieure à 3,5 g/cm³, notamment inférieure à 3,0 g/cm³.

14. Pièce (1) moulée suivant l'une des revendications 8 à 13, qui est essentiellement exempte d'oxyde d'aluminium (Al₂O₃) libre.

15. Pièce (1) moulée suivant l'une des revendications 8 à 14, qui a dans les conditions normales une résistance à la flexion mesurée au milieu de plus de 6 MPa dans un essai de flexion à quatre points.

16. Pièce (1) moulée suivant l'une des revendications 8 à 15, qui est disposée sur une paroi d'une chambre (3) qui peut être soumise à du gaz chaud, notamment d'une chambre de combustion d'une turbine à gaz.

17. Garnissage d'une chambre (3) qui peut être soumise à du gaz chaud, notamment d'une chambre de combustion d'une turbine à gaz, comprenant au moins une pièce (1) moulée suivant l'une des revendications 8 à 16, destinée à protéger une paroi (4) de la chambre (3) du gaz chaud.

18. Procédé de fabrication d'une pièce (1) moulée pour un gamissage (2) réfractaire, dans lequel on mélange à de l'eau une matière à mouler, ayant une proportion en poids de plus de 50% de spinelle (MgO*Al₂O₃) ainsi qu'une proportion supérieure à zéro et inférieure à 15% d'aluminate de calcium (CaO*n Al₂O₃ n allant de 1 à 6), on sèche et on calcine à une température supérieure à 1350°C, notamment supérieure à 1500°C environ, le spinelle ayant en pourcentage en poids moins de 95% d'Al₂O₃ et plus de 5% de MgO.
